# EUROPEAN PATENT APPLICATION

(11) **EP 1 413 408 A1**
(43) Date of publication of application: **28.04.2004**
(21) Application number: 03078305.4
(22) Date of filing: 20.10.2003
(51) Int. Cl.: B26D 7/26, B26D 11/00, C03B 37/16

(54) **Method and arrangement for cutting a moving web**

(30) Priority: 22.10.2002 FI 20021881
(71) Applicant: Paroc Group Oy Ab, 01300 Vantaa (FI)
(72) Inventor: Borg, Carl, 20750 Turku (FI)
(74) Representative: Nordin, Leif Göran

(57) **Abstract**

The invention relates to a method and to an apparatus for cutting a moving web in the direction of its motion. The mineral wool web is cut in a cutting position, which is located at a distance from the edge of the mineral wool web. The cutting is performed with a cutting unit (3) comprising a cutting blade, which is arranged on a guiding member (8) extending partly over the moving web. When the distance of the cutting position from the edge of the mineral wool web is changed the guiding member is kept stationary and its length over the mineral wool web is kept constant or substantially constant, and the cutting unit (3) with the cutting blade (5) is moved to the cutting position along the guiding member.

## Description

The present invention relates to a method and to an apparatus for cutting a moving web in its longitudinal direction. The present invention particularly relates to cutting a moving continuous web of mineral wool in its direction of motion during the manufacturing of mineral wool.

Mineral wool, such as rock wool, is made by melting suitable mineral-containing raw materials, such as diabase, limestone and slag in a melting furnace. The obtained silicate-containing mineral melt is discharged from the melting furnace in the form of a melt jet to a fiberising apparatus, such as a spinning machine, in which the melt is formed into mineral fibres. A binder may be applied on the formed mineral fibres, either during the fibre formation or thereafter.

The formed mineral fibres are collected as a fibre mat, which can be processed in several different manners, for instance by oscillating, curing and compressing. The processed fibre mat moves forward in the process, in the form of a continuous web. The finished fibre mat, i.e. the mineral wool web, will be cut both in the longitudinal direction of the web, i.e. in the web's direction of motion, and in the cross direction of the web, i.e. in a direction perpendicular to the web's direction of motion. This provides mineral wool slabs having a desired width and length. The cut mineral wool slabs are weighed in order to control their surface weight, and the accepted slabs are then transported to a packing machine.

The cutting of the mineral wool web in its longitudinal direction is performed by a cutting unit, which comprises a rotating cutting blade. The cutting unit is fixed in a bracket arranged at the end of a rotating adjustment screw. The position of the cutting blades must be adjustable in the cross direction of the web according to desired slab dimensions, i.e. according to the desired width of the slabs to be produced. The position of the cutting blade in relation to the mineral wool web can be adjusted by rotating the adjustment screw with the aid of a motor, which adjusts the length of the adjustment screw above the web. The cutting of a mineral wool web requires normally a plurality of cutting units, and each cutting unit is arranged at the end of its own adjustment screw.

The amount of produced mineral fibres per time unit has increased in the manufacturing of mineral fibres. Several fiberising apparatuses have also been arranged in parallel, however so that the formed mineral fibres are collected on one collecting surface. In order to keep the surface weight of the collected fibre mat regardless of this on a relatively low level and in order to retain low collected mineral wool mats thin, the width of the collected mineral wool mat has been increased, i.e. the width of the collecting line has increased. The width of the mineral wool web is often up to 2.5 metres, but it can be even greater than 3 metres.

Wide mineral wool webs cause problems when the web is cut in its direction of motion. The width of the web makes it necessary to use several cutting units of the type described above in order to obtain mineral wool slabs with the desired dimensions. When several cutting units are arranged in parallel the design of the total cutting arrangement will become complicated and difficult to manufacture and maintain. At the same time the arrangement will occupy a large space at the web and on the side of the web, and consequently it is uneconomical to arrange more than four cutting units in parallel. As the webs have become wider the number of cutting units is not sufficient, but there is an acute demand for more units.

Therefore an object of this invention is to provide a method and an apparatus in the manufacturing of mineral wool where the disadvantages mentioned above have been minimised.

An object of the invention is to provide a method and an apparatus for cutting, which facilitates cutting of a mineral wool web in its direction of motion into a desired number of sub-webs.

An object is to provide a method and an apparatus, which facilitates a simple and flexible cutting of wide mineral wool webs, and which thus makes it possible to increase the capacity of the mineral wool production.

These objects are attained with a method and an apparatus, which have the characteristics presented in the characterising parts of the enclosed independent claims.

A typical method according to the present invention for cutting a moving mineral wool web in its direction of motion comprises the following steps:
- the moving mineral wool web is cut in a cutting station, which is located at a distance from the edge of the mineral wool web,
- the cutting is made with a cutting unit, which comprises a cutting blade, and which has been arranged on a guiding member extending at least partly over the moving web, and
- when the distance of the cutting position from the edge of the mineral wool web is changed, then the guiding member is kept stationary and its length over the mineral wool web is kept constant or substantially constant, and the cutting unit with the cutting blade is moved to the cutting position along the guiding member.

A typical apparatus according to the present invention for cutting a moving mineral wool web in its direction of motion comprises
- a cutting unit arranged on a guiding member extending at least partly over the mineral wool web,
- a cutting blade arranged in connection with the cutting unit, and
- a motor means.

When the distance of the cutting position from the edge of the mineral wool web is changed the guiding member is arranged to be stationary and its length over the mineral wool web is arranged to be constant or substantially constant, and the cutting unit with the cutting blade is arranged to be movable along the guiding member.

Thus, it has now been surprisingly found that by keeping the guiding member stationary and its length over the web constant, and by instead arranging the cutting unit to be movable along the guiding member the cutting position can be simply and flexibly changed in the cutting of the mineral wool web. It is also possible to a great deal wider mineral wool webs than previously, as it is simple to arrange a number of cutting units on one guiding member, whereby the cutting units can be independently moved along the guiding member. Previously a cutting unit was arranged at the end of a guiding member, the length of which was changed when the cutting position was changed. If several cutting units were used, then each cutting unit had a guiding member of its own, which caused problems regarding the space available at the mineral wool web.

According to preferred embodiment of the present invention the cutting of the mineral wool web is made at two or more cutting positions with the aid of two or more cutting units arranged on a guiding member. The guiding member having a constant length is arranged to extend stationary above the mineral wool web. The guiding member can be a stationary screw, i.e. a non-rotating screw, or a rail, a bar or some other suitable arrangement. According to a preferred embodiment the guiding member extends over substantially the whole width of the mineral wool web. The important fact is that the length of the guiding member extending over the web is not changed when the cutting positions of the cutting units are changed.

A cutting unit comprises a rotating cutting blade or the like, a motor means for rotating the cutting blade, and a positioning means fastened to the cutting blade. According to a preferred embodiment of the present invention each cutting unit is moved to the selected cutting position on the guiding member with the aid of a driving means of its own, such as a motor, with which the positioning means is moved into the correct position. With the aid of these driving means the cutting units can be independently moved along the guiding member. A ball nut or a corresponding arrangement can act as the positioning means. Consequently, the distance between two cutting positions can be easily and freely chosen, i.e. the distance between two cutting units.

According to an embodiment of the present invention the position of the cutting unit or cutting units on the guiding member can be controlled with the aid of an electronic control system. The positioning means are provided with position sensors, such as pulse transducers, which are connected to the control system. The desired distance between the cutting units, i.e. the desired distance between the cutting blades is entered into the control system, and then the positioning means are moved by drive means to the desired mutual distance. The electronic control system comprising a position sensor adjusts the mutual distance between the cutting units and/or their distance from a predetermined reference point. Different types of pulse transducers or other corresponding sensors can be used as the position sensors. In some cases the position sensor can be included in the drive means of the positioning means, such as servomotors.

According to another embodiment of the present invention each cutting unit comprises means for moving the cutting unit or only its blade to a standby position. In the standby position the blade has no cutting contact to the mineral wool web, in other words the blade does not cut into the mineral wool web. In this way it is possible to arrange a certain number of cutting units on the guiding member, and then freely determine the number of cutting units in the standby position and in the cutting position. This provides an increased flexibility, as one can freely choose the number of cutting units in use, their mutual distances and their cutting position in relation to the mineral wool web. In other words, the position of the cutting unit or its cutting blade can be freely moved between a standby position without any cutting contact to the mineral wool web and a cutting position, where the cutting blade cuts the web. The motion is carried out with the aid of means for moving the cutting unit or its cutting blade between the standby position and the cutting position.

Below some preferred embodiments of the invention are described in more detail with reference to the following figures, in which
Figure 1 shows schematically an embodiment of an apparatus for cutting a mineral wool web according to the present invention, as seen against the direction of motion of the mineral wool web,
Figure 2 shows schematically an embodiment of an apparatus for cutting a mineral wool web according to the present invention, as seen straight from above,
Figure 3 shows schematically a detail of an apparatus for cutting a mineral wool web according to the present invention, as seen against the direction of motion of the mineral wool web,
Figure 4 shows schematically a detail of an apparatus for cutting a mineral wool web according to the present invention, as seen straight from above, and
Figures 5A and 5B show schematically a detail of an apparatus for cutting a mineral wool web according to the present invention.

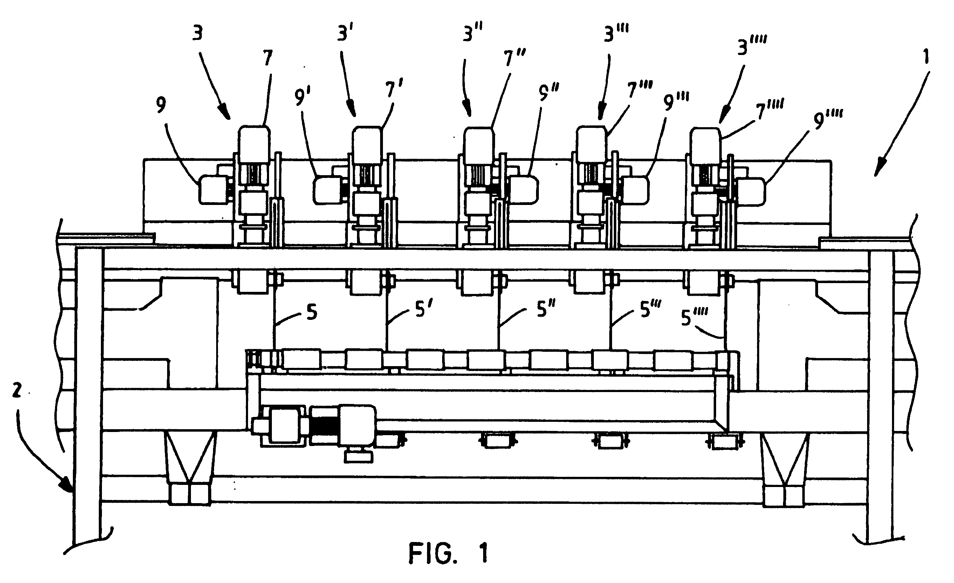

Figure 1 shows schematically an embodiment of an apparatus 1 for cutting a mineral wool web according to the present invention, as seen against the direction of motion of the mineral wool web. Figure 1 shows also the support structure 2 of the apparatus 1. The apparatus 1 comprises a number of cutting units 3, 3', 3", 3''', 3"". Each separate cutting unit comprises a rotating cutting blade 5, 5', 5", 5''', 5'''' for cutting the mineral wool web, and a motor 7, 7', 7", 7"', 7'''' acting as the driving means for driving the cutting blade 5, 5', 5", 5"', 5"". All cutting units 3, 3', 3", 3"', 3"" are arranged on a guiding member and they are freely movable, i.e. independently of each other along the guiding member with the aid of motors 9, 9', 9", 9"', 9''''. The guiding member is not visible in figure 1.

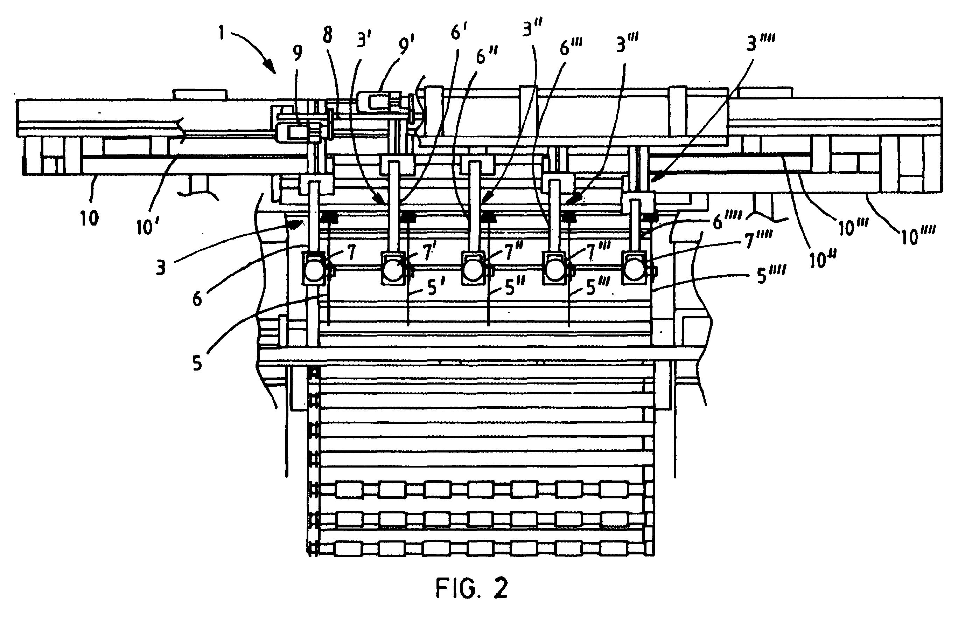

Figure 2 shows schematically an embodiment of an apparatus 1 for cutting a mineral wool web according to the present invention, as seen straight from above. The apparatus 1 comprises a number of cutting units 3, 3', 3", 3"', 3"". Each separate cutting unit comprises a rotating cutting blade 5, 5', 5", 5''', 5"" for cutting the mineral wool web, and a motor 7, 7', 7", 7"', 7"", which drives the cutting blade 5, 5', 5", 5''', 5"". The cutting blades 5, 5', 5", 5"', 5"" and their motors 7, 7', 7", 7''', 7"" are arranged at the end of shafts 6, 6', 6", 6''', 6"".

All cutting units 3, 3', 3", 3''', 3'''' are arranged on a guiding member 8, and they are freely movable, i.e. independently of each other along the guiding member 8 with the aid of motors 9, 9' . For simplicity only two motors 9, 9' are shown in figure 2, but to a person skilled in the art it is obvious that each cutting unit may comprise a motor. In addition to the guiding member 8 each cutting apparatus is arranged in contact with a supporting means 10, 10', 10", 10"', 10"".

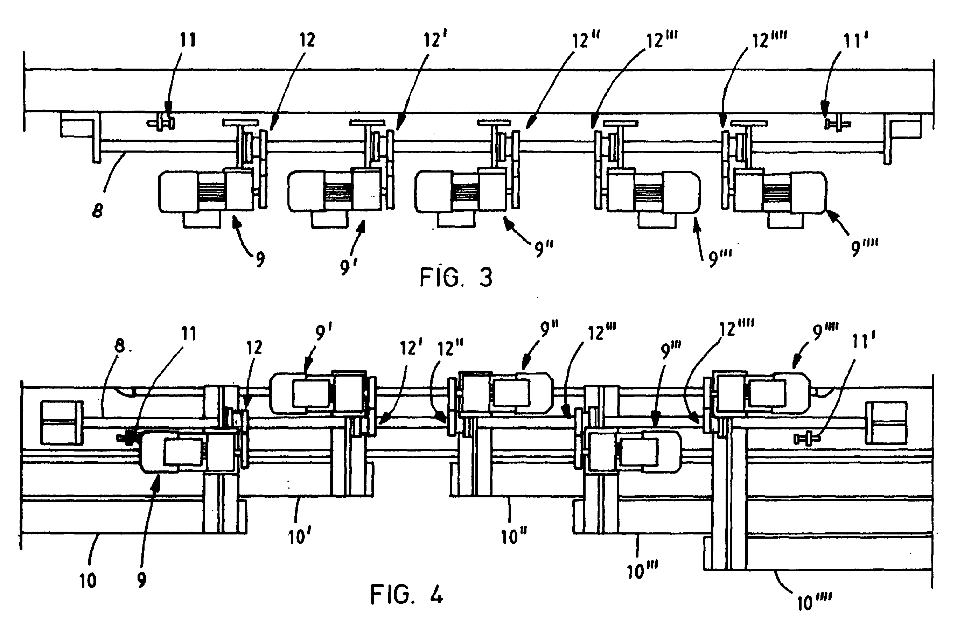

Figure 3 shows schematically a detail of an apparatus for cutting a mineral wool web according to the present invention, as seen against the direction of motion of the mineral wool web. The figure 3 shows a guiding member 8 and motors 9, 9', 9", 9''', 9'''' acting as the driving means, with the aid of which the individual cutting units can be freely moved, i.e. independently along the guiding member 8. The motor 9, 9', 9", 9"', 9"" drives a positioning means 12, 12', 12", 12"', 12'''' along the guiding member 8. Figure 3 also shows mechanical limiting members 11, 11', which prevent the cutting units from moving too far, if the electronic control system operates in an unforeseen manner.

Figure 4 shows schematically a detail of an apparatus for cutting a mineral wool web according to the present invention, as seen straight from above. Figure 4 shows a guiding member 8 and motors 9, 9', 9", 9"', 9'''' acting as driving means, with which the individual cutting units are freely moved, i.e. independently of each other, along the guiding member 8 with the aid of a positioning means 12, 12', 12", 12"', 12"". Figure 4 shows also the mechanical limiting members 11, 11' as well as the supporting means 10, 10', 10", 10"', 10'''' for each cutting unit.

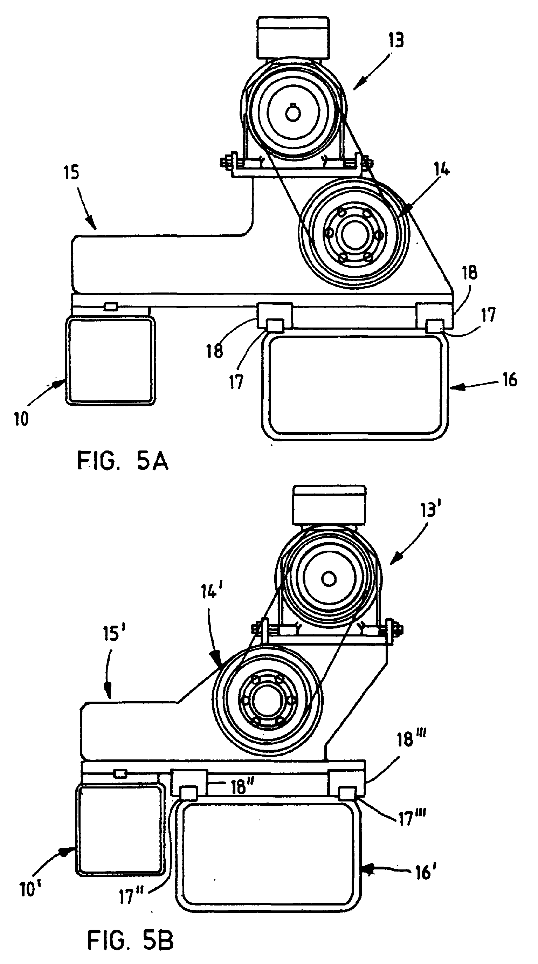

Figures 5A and 5B show schematically two details of two different cutting units in an apparatus for cutting a mineral wool web according to the present invention. The figures 5A and 5B show a driving means 13, 13', which drives the ball nut 14, 14' acting as the positioning means along the stationary guiding member. The guiding member is not shown in figure 5. The ball nut 14, 14' and the driving means 13, 13' are attached to a bracket 15, 15', which in turn moves on slides 18, 18', 18", 18"' or similar means along rails 17, 17', 17", 17''' arranged on a bar 16, 16'. The bar 16, 16' acts as an additional support means. The bracket 15, 15' is also attached to a supporting member 10, 10' .

Thus, the present invention for cutting moving mineral wool webs in their direction of motion facilitates a simple and flexible way to change the cutting positions in cutting the mineral wool web in its longitudinal direction. The present invention also makes it possible to cut much wider mineral wool webs than previously, because several cutting units can be arranged on a single guiding member in a simple manner. With the aid of the invention it is possible to increase the cutting capacity of a mineral wool line.

Even if the invention has been described with reference to embodiments, which at present can be considered to be the most practical and preferred embodiments, it is obvious that the invention shall not be restricted to the embodiments described above, but it is also intended to cover different modifications and equivalent technical solutions within the scope of the enclosed claims.

## Claims

1. A method for cutting a moving mineral wool web in its direction of motion, whereby
- the moving mineral wool web is cut in a cutting position, which is located at a distance from the edge of the mineral wool web,
- the cutting is performed with a cutting unit, which comprises a cutting blade, and which has been arranged on a guiding member extending at least partly over the moving web, and
**characterised in that**
when the distance of the cutting position from the edge of the mineral wool web is changed, then the guiding member is kept stationary and its length over the mineral wool web is kept constant or substantially constant, and the cutting unit with the cutting blade is moved to the cutting position along the guiding member.

2. A method according to claim 1, **characterised in that** cutting is performed in two or more cutting positions with the aid of two or more cutting units on the guiding member.

3. A method according to claim 2, **characterised in that** each cutting unit is moved to its position on the guiding member with the aid of a motor means of its own, which motor means is fastened to the cutting unit.

4. A method according to claim 2, **characterised in that** the cutting units are moved independently of each other.

5. A method according to claim 1, **characterised in that** the position of a cutting unit or the cutting units on the guiding member is controlled by a control means.

6. A method according to claim 1, **characterised in that** the guiding member extends substantially over the whole width of the mineral wool web.

7. A method according to claim 1, **characterised in that** the position of a cutting unit or its cutting blade is moved between a standby position without any cutting contact to the mineral wool web and a cutting position, where the cutting blade cuts the web, with the aid of means for moving the cutting unit or its cutting blade between the standby position and the cutting position.

8. A cutting apparatus for cutting a moving mineral wool web in its direction of motion comprising
- a cutting unit arranged on a guiding member extending at least partly over the mineral wool web,
- a cutting blade arranged in connection with the cutting unit; and
- a motor means,
**characterised in that**
when the distance of the cutting position from the edge of the mineral wool web is changed the guiding member is arranged to be stationary and its length over the mineral wool web is arranged to be constant or substantially constant, and the cutting unit with the cutting blade is arranged to be movable along the guiding member.

9. A cutting apparatus according to claim 8, **characterised in that** the apparatus comprises two or more cutting units on the guiding member for cutting the mineral wool web in two or more cutting positions.

10. A cutting apparatus according to claim 8 or 9, **characterised in that** a motor means is attached to the cutting unit, whereby the motor means moves the cutting unit to its position on the guiding member.

11. A cutting apparatus according to claim 9, **characterised in that** the cutting units are arranged to be movable independently of each other.

12. A cutting apparatus according to claim 8, **characterised in that** the apparatus comprises a control means, which controls the position of the cutting unit or the cutting units on the guiding member.

13. A cutting apparatus according to claim 8, **characterised in that** the guiding member is arranged to extend substantially over the width of the mineral wool web.

14. A cutting apparatus according to claim 8, **characterised in that** at a cutting unit or its cutting blade there are arranged means for moving the cutting unit or its cutting blade between a standby position without any cutting contact to the mineral wool web and a cutting position, where the cutting blade cuts the web.
